## Europäisches Patentamt

## European Patent Office

## Office européen des brevets

(11) Publication number: **0 141 988**
**B1**

(12) **EUROPEAN PATENT SPECIFICATION**

(45) Date of publication of patent specification: **18.05.88**

(21) Application number: **84111536.3**

(22) Date of filing: **27.09.84**

(51) Int. Cl.⁴: **C 10 G 11/18,** C 10 G 11/04, B 01 J 29/38, B 01 J 38/10

(54) **Passivation of metal contaminants on cracking catalyst.**

(30) Priority: **28.09.83 US 536820**

(43) Date of publication of application: **22.05.85 Bulletin 85/21**

(45) Publication of the grant of the patent: **18.05.88 Bulletin 88/20**

(84) Designated Contracting States: **AT BE CH DE FR GB IT LI LU NL SE**

(56) References cited:
EP-A-0 052 356
US-A-4 280 895
US-A-4 321 129

(73) Proprietor: **PHILLIPS PETROLEUM COMPANY 5th and Keeler Bartlesville Oklahoma 74004 (US)**

(72) Inventor: **Bertus, Brent Joseph 1318 S.E. Swan Drive Bartlesville, OK 74006 (US)**
Inventor: **Schaffer, Arnold Martin 2541 S.E. Evergreen Drive Bartlesville, OK 74006 (US)**

(74) Representative: **Dost, Wolfgang, Dr.rer.nat., Dipl.-Chem. et al Patent- und Rechtsanwälte Bardehle-Pagenberg-Dost-Altenburg & Partner Postfach 86 06 20 D-8000 München 86 (DE)**

Courier Press, Leamington Spa, England.

## Description

The present invention relates to the catalytic cracking of hydrocarbons. In another aspect, this invention relates to the passivation of contaminating metals that exist on cracking catalysts.

It is well known to employ catalysts for cracking, i.e. the conversion of relatively high molecular weight hydrocarbons, such as gas oil, petroleum residuum, and the like, to relatively low molecular weight hydrocarbons such as naphtha. As in any catalytic process deactivation of the catalyst is a significant economic factor in cracking.

Factors contributing to the deactivation of cracking catalysts include coke formation and the formation of deposits of contaminating metals such as nickel, vanadium, iron, and copper. These metals can come from erosion of the metallic equipment or from corresponding metals and metal compounds in the hydrocarbon feed. The coke can generally be removed by exposing deactivated catalyst to regeneration wherein the carbonaceous materials thereon are consumed by combustion.

The deposited metals generally reduce the activity of the catalyst and increase the production of hydrogen, light gases, and coke at the expense of the highly desired gasoline. In the past one technique for passivating such metal contaminants, i.e. reducing one or more of those adverse effects of such metals, has been to react the catalyst with a passivating agent. One particularly popoular method has involved the employment of the antimony-containing passivating agents in conjunction with the catalyst. Examples of such techniques are disclosed in U.S.—A—3,711,422 US—A—4,025,545; and US—A—4,031,002. More recently it has been discovered that even better results can be obtained using a combination of antimony and tin as a passivating agent. See US—A—4,321,129.

US—A—4,280,895 discloses that when antimony is employed as the passivating agent the level of passivation can be further increased by contacting the catalyst with a reducing gas. The same is shown in EP—A—0,052,356, the disclosure of which is incorporated herein by reference.

An object of the present invention is to provide a means for providing further passivation for those systems in which a combination of antimony and tin is employed as the passivating agent.

In accordance with the present invention a cracking catalyst containing at least one contaminating metal selected from the group consisting of nickel, vanadium, iron, cobalt, and copper and a passivant comprising effective amounts of antimony and tin is contacted with a reducing gas under conditions to provide at least some additional passivation and then protected from any conditions which would negate said additional passivation prior to use of the passivated catalyst in the cracking of a hydrocarbon.

Another aspect of the present invention involves the cracking of hydrocarbons using a catalyst which has been subjected to such a passivation process.

Catalysts which can be used in the process of this invention include those known to the art as fluidized catalytic cracking catalysts. Specifically, the high activity aluminosilicate or zeolite-containing catalysts can be used and are preferred because of their higher resistance to the deactivating effects of high temperatures, exposure to steam, and exposure to metals contained in the feedstock. The well-known amorphous silica alumina catalysts may also be used. Other examples of catalysts which might be used, with or without zeolite are alumina, magnesia-silica, and titania-silica.

The catalytic cracking materials can vary in pore volume and surface area. Generally, however, the unused cracking catalyst will have a pore volume in the range of about 0.1 to about 1 ml/g. The surface area of this unused catalytic cracking material generally will be in the range of about 50 to about 500 $m^2/g$.

The catalyst employed in this invention consists essentially of a conventional cracking catalyst having a modifying or passivating amount of both antimony and tin therein or thereon. The quantity of antimony and tin is generally such that about 0.0001 to about 8, more generally about 0.005 to about 2, preferably about 0.01 to about 1, and more preferably about 0.01 to about 0.8, weight percent antimony and about 0.0001 to about 8, more generally about 0.0005 to about 2, preferably about 0.001 to about 1, and more preferably about 0.001 to about 0.8, weight percent tin are deposited on the catalyst, these percentages being based on the weight of cracking catalyst prior to treatment with antimony and tin or compounds thereof. The amount of antimony and tin which is most desirable on the catalyst will vary according to the effective level of contaminating metals on the catalyst, with higher values of antimony and tin being desirable for higher effective values of contaminating metals.

For best results it is currently considered that the weight ratio of antimony to tin should be at least 1/1 and more preferably in the range of about 8/1 to 14/1

The manner in which the conventional cracking catalyst is contacted with the antimony and tin modifying or treating agents is not critical. For example, the agents in finely divided form can be mixed with the conventional cracking catalyst in ordinary manner such as rolling, shaking, stirring or the like. Alternatively, the treating agents can be dissolved or dispersed in a suitable liquid, e.g., water, hydrocarbon or aqueous acid, depending in part on the particular modifying agents used, and the resulting solution or dispersion can be used to impregnate the conventional cracking catalyst, followed by volatilization of the liquid, or the modifying agents can be precipitated onto the catalyst from solutions of the treating agents in different chemical form, followed by solvent removal. If desired, the modifying agents can be dissolved or dispersed in the hydrocarbon feedstock to the cracking process, in which instance the hydrocarbon feedstock and the treating agents contact the cracking catalyst at about the same time. Also, if desired, the cracking catalyst can be exposed to the treating agents in vapor form to deposit the agents on the catalyst.

Of course, combinations of the various methods can be employed to achieve modification of the catalyst with the treating agents. The modifying agents can be added to the catalyst simultaneously or sequentially. The addition of the modifying agents can be continuous or intermittent, as desired. One modifying agent can be added to the catalyst directly or via the feedstock during a first period of time and the second modifying agent can be subsequently added to the catalyst directly or via the feedstock during a second period of time.

The form in which the antimony and tin are present in or on the catalyst is not considered critical. Examples of typical antimony and tin compounds for use in passivation are disclosed in US—A—4,321,129, the disclosure of which is incorporated herein by reference.

The treatment of the contaminated catalyst with the reduction gas can be carried out in the same manner as disclosed in the aforementioned European patent. Generally any gas capable of reducing the oxidation state of the contaminating metals is considered suitable. Typical examples include carbon monoxide, hydrogen, propane, methane, ethane, ethylene, and mixtures thereof. Accordingly, sources of reducing gas can include regenerator off gases and light gaseous streams from a catalytic cracking process.

The volume of reducing gas and the temperature for the reducing step can vary depending upon the amount of contaminants present and the amount of additional passivation desired. The lower limit for the temperature will generally be about 454°C (850°F). The upper limit for the temperature will be the maximum temperature to which the catalyst can be exposed without being degraded or destroyed to a point where the treatment would be useless. Typically, temperatures in the range of 454°C to 760°C (850°F to 1400°F) would be employed, more preferably 482°C to 704°C (900°F to 1300°F).

Since oxidation has been found to reverse at least some of the passivation provided by the reduction step, the catalyst after contact with the reducing gas should preferably have little or no contact with oxygen prior to use in the cracking process.

Preferably, the metals contamined catalyst is contacted with a combustion supporting gas under conditions sufficient to reduce the amount of carbon on said catalyst, prior to the treatment with the reducing gas. Most preferably the catalyst is contacted with the combustion supporting gas under conditions sufficient to result in the combustion of substantially all of the carbon on said catalyst. The conditions needed to produce removal of carbon are well known in the art and typically involve contacting the catalyst with oxygen at a temperature in the range of 510°C to 816°C (950°F to 1500°F).

The passivated catalyst resulting from the present invention can be used in any suitable cracking process, including those disclosed in US—A—4,321,129 and US—A—4,280,895. Typically this involves contacting a hydrocarbon-containing feed with the catalyst in a cracking zone at a temperature in the range 427°C to 650°C (800°F to 1200°F). Pressures typically are in the range of about atmospheric to about 103 kPa (.3000 psig). The weight ratio of catalyst to feed is generally in the range of about 3/1 to 30/1.

The present invention is particularly useful for catalytic cracking of feedstocks that contain metal contaminants such as nickel, vanadium, iron, copper and/or cobalt and the like. Typical feedstocks include those which are conventionally utilized in catalytic cracking processes to produce gasoline and light distillate fractions from heavier hydrocarbon feedstocks. Such feedstocks generally have an initial boiling point above about 400°F (204°C.) and include fluids such as gas oils, fuel oils, cycle oils, slurry oils, topped crudes, shale oils, oils from tar sands, oils from coal, mixtures of two or more of these, and the like. By "topped crude" is meant those oils which are obtained as the bottoms of a crude oil fractionator. If desired, all or a portion of the feedstock can constitute an oil from which a portion of the metal content previously has been removed, e.g., by hydrotreating or solvent extraction.

Typically the feedstock utilized in the process of this invention will contain one or more of the metals nickel, vanadium and iron within the ranges shown in the following table:

| Metal | Metal content of feedstocks, ppm[1] |
|---|---|
| Nickel | 0.02 to 100 |
| Vanadium | 0.02 to 500 |
| Iron | 0.02 to 500 |
| Total metals | 0.2 to 1100[2] |

[1]The ppm metal content refers to the feedstock as used. As used in this table and throughout the specification, ppm means parts per million, by weight.

[2]Total metals in this table and elsewhere refers to the sum of the nickel, vanadium and iron contents in the feedstock that are effective in contaminating the catalyst; the total metals content can be determined in accordance with methods well known in the art, e.g., by atomic absorption spectroscopy.

A further understanding of the invention and its benefits will be provided by the following example.

Example I

The catalyst employed in this example was an equilibrium catalyst removed from a commercial cracking process in which antimony was added to the feed as a metals passivating agent. The catalyst comprised crystalline aluminosilicate zeolite associated with amorphous silica-alumina. The properties of the used catalyst are as follows:

| | |
|---|---|
| Surface area, m²/g | 70.6 |
| Pore volume, cc/g | 0.34 |

| Elemental composition | Weight % |
|---|---|
| Si | 25.4 |
| Al | 20.9 |
| C | 0.40 |
| Ni | 0.33 |
| V | 0.63 |
| Fe | 0.78 |
| Ce | 0.26 |
| La | 1.03 |
| K | 0.25 |
| Sb | 0.12 |
| Na | 0.75 |
| P | 0.47 |

·Prior to use in this example the catalyst was subjected to regeneration with air at a temperature of about 677°C (about 1250°F) to eliminate substantially all the carbon.

Portions of this catalyst were impregnated with a cyclohexane solution of dibutyltin bis(isooctyl mercaptoacetate) sold as Theromlite 31 by M & T Chemical Company. The solution and catalyst were heated and stirred until the catalyst appeared to be dry. The catalyst was then subjected to 10 aging cycles wherein each cycle involved fluidizing the catalyst with nitrogen for about 1 minute at about 482°C (about 900°F), heating to about 510°C (about 950°F) over about 2 minutes while fluidizing with hydrogen, then maintaining a temperature at about 370°C (about 950°F) for 1 minute while fluidizing with nitrogen, then heating to 649°C (1200°F) for 10 minutes while fluidized with air, then cooling to about 900°F while fluidized with air. After the 10 aging cycles the catalyst was cooled to room temperature (about 25°C) while fluidizing with nitrogen. One portion of this Sb/Sn catalyst was subjected to reduction with hydrogen at 677°C (1250°F) for 5 minutes at a hydrogen to HSV of 245 immediately before use in cracking.

The catalyst was evaluated in bench scale laboratory fluidized bed reactors at 510°C (950°F) with regeneration at 677°C (1250°F) between each cracking run. In the inventive runs the catalyst after regeneration with air was contacted with flowing hydrogen for one hour at 677°C (1250°F) before being cooled to 510°C for the cracking operation.

The hydrocarbon feed used was West Texas topped crude having the following properties: 6.22 ppm nickel, 6.8 ppm vanadium, and 15.4 ppm iron.

The results of hydrogen pretreatment (HPT) are set forth in the following table:

| | Wt% | | | | Yields* | | |
|---|---|---|---|---|---|---|---|
| HPT | Sn | SB | Conv. Vol% | Coke Wt% of feed | H₂SCF/Bbl feed conv. | Gasoline vol% | (410—650°F) (210—345°C) vol% |
| No | 0 | 0.12 | 77.0 | 13.7 | 591 | 55.0 | 16.8 |
| No | 0.01 | 0.12 | 75.7 | 12.1 | 614 | 56.9 | 17.9 |
| Yes | 0.01 | 0.12 | 73.8 | 10.2 | 489 | 60.5 | 19.0 |

*Average values from two cracking runs.

The results demonstrate that as taught by the prior art the combination of antimony and tin can produce even better passivation than antimony when used alone. This is illustrated by the fact that the yield of gasoline was increased even though the conversion level was slightly lower.

Although the conversion level was even somewhat lower for the inventive run using HPT it will be noted that the HPT provides a still further improvement in the gasoline yield. Further, from past evaluations involving Sb/Sn passivated catalysts it is considered that at least part of the observed differences in coke and hydrogen in the HPT runs are due to the HPT and not just to the difference in the conversion. Past experience with Sb/Sn catalysts has shown that a reduction in conversion from about 75% to about 73% would reduce the coke yield by about 0.8 weight percent. Thus about half of the reduction in coke in the inventive runs is attributed to the HPT.

**0 141 988**

This data demonstrates that if one uses HPT it is possible to provide benefits above and beyond those produced using only Sb and Sn.

**Claims**

1. A continuous cracking process including passivating metal contaminants on a cracking catalyst wherein a hydrocarbon-containing feed is contacted with a cracking catalyst in a cracking zone under cracking conditions, said cracking catalyst becomes contaminated with at least one contaminating metal selected from nickel, vanadium, iron, cobalt and copper in said cracking zone, a combination of antimony and tin is employed to passivate said at least one contaminant metal, catalyst is removed from said cracking zone and is contacted with a combustion supporting gas in a regeneration zone to reduce the amount of carbon on said catalyst, catalyst is removed from the regeneration zone and contacted with a reducing gas in a reducing zone, and catalyst having thus been passivated is removed from the reducing zone and passed back into the cracking zone for reuse in cracking hydrocarbon feed prior to being subjected to any treatment which would negate the additional passivation obtained as a result of the reaction in the reduction zone.

2. The process of claim 1, characterized in that said catalyst comprises crystalline aluminosilicate.

3. The process of any of the preceding claims, characterized in that said reducing gas comprises hydrogen.

4. The process of any of claims 1 to 3, characterized in that said cracking catalyst becomes contaminated with nickel in said cracking zone.

5. The process of any of claims 1 to 4, characterized in that said catalyst becomes contaminated with vanadium in said cracking zone.

**Patentansprüche**

1. Kontinuierliches Krackverfahren mit passivierenden Metallverunreinigungen an einem Krackkatalysator, wobei eine kohlenwasserstoffhaltige Beschickung mit einem Krackkatalysator in einer Krackzone unter Krackbedingungen in Kontakt gebracht wird, der Krackkatalysator mit wenigstens einem verunreinigenden Metall, gewählt aus Nickel, Vanadium, Eisen, Kobalt und Kupfer, in der Krackzone verunreinigt wird, eine Kombination von Antimon und Zinn eingesetzt wird, um wenigstens ein verunreinigendes Metall zu passivieren, der Katalysator aus der Krackzone entfernt wird und mit einem die Verbrennung unterstützenden Gas in einer Regenerierungszone kontaktiert wird, um die Menge von Kohlenstoff an dem Katalysator zu vermindern, der Katalysator aus der Regenerierungszone entfert wird und mit einem reduzierenden Gas in einer Reduktionszone kontaktiert wird, und der so passivierte Katalysator aus der Reduktionszone entfernt wird und in die Krackzone zur Wiederverwendung in einer Krackkohlenwasserstoff-Beschickung zurückgeleitet wird, bevor er irgendeiner Behandlung unterworfen wird, welche die zusätzliche Passivierung aufheben würde, die als Ergebnis der Reaktion in der Reduktionszone gewonnen wurde.

2. Verfahren nach Anspruch 1, dadurch gekennzeichnet, daß der Katalysator kristallines Aluminosilikat aufweist.

3. Verfahren nach einem der vorhergehenden Ansprüche, dadurch gekennzeichnet, daß das reduzierende Gas Wasserstoff aufweist.

4. Verfahren nach irgendeinem der Ansprüche 1 bis 3, dadurch gekennzeichnet, daß der Krackkatalysator in der Krackzone mit Nickel verunreinigt wird.

5. Verfahren nach irgendeinem der Ansprüche 1 bis 4, dadurch gekennzeichnet, daß der Katalysator in der Krackzone mit Vanadium verunreinigt wird.

**Revendications**

1. Procédé de craquage en continu impliquant la passivation des contaminants métalliques sur un catalyseur de craquage dans lequel un matériau d'alimentation contenant un hydrocarbure est mis en contact avec un catalyseur de craquage dans une zone de craquage dans des conditions de craquage, le catalyseur de craquage devenant contaminé avec au moins un métal de contamination choisi parmi le nickel, le vanadium, le fer, le cobalt et le cuivre dans la zone de craquage; une combinaison d'antimoine et d'étain est employée pour passiver au moins l'un des métaux contaminants; le catalyseur est extrait de la zone de craquage et mis en contact avec un gaz de support de la combustion dans une zone de régénération pour réduire la quantité de carbone sur le catalyseur; le catalyseur est extrait de la zone de régénération et mis en contact avec un gaz de réduction dans une zone de réduction; et le catalyseur ayant été ainsi passivé est enlevé de la zone de réduction et envoyé dans la zone de craquage pour réutilisation dans le craquage de l'hydrocarbure d'alimentation avant d'être soumis à un traitement qui annulerait la passivation supplémentaire obtenue à la suite de la réaction dans la zone de réduction.

2. Procédé selon la revendication 1, caractérisé en ce que le catalyseur comprend de l'aluminosilicate cristalline.

3. Procédé selon l'une quelconque des revendications précédentes, caractérisé en ce que le gaz de réduction comprend de l'hydrogène.

4. Procédé selon l'une quelconque des revendications 1 à 3, caractérisé en ce que le catalyseur de craquage devient contaminé avec du nickel dans la zone de craquage.

5. Procédé selon l'une quelconque des revendications 1 à 4, caractérisé en ce que le catalyseur devient contaminé avec du vanadium dans la zone de craquage.